# EUROPEAN PATENT APPLICATION

(11) **EP 1 265 142 A1**
(43) Date of publication of application: **11.12.2002**
(21) Application number: 01410065.5
(22) Date of filing: 08.06.2001
(51) Int. Cl.: G06F 11/273, G06F 11/22

(54) **Method and computer program for obtaining configuration information from a computer**

(71) Applicant: Hewlett-Packard Company, Palo Alto, CA 94304 (US)
(72) Inventor: Owhadi, Eric, 38360 Sassenage (FR)
(74) Representative: Lloyd, Richard Graham

(57) **Abstract**

A method of obtaining configuration information from a computer, comprising procuring information-gathering software and using the software to gather configuration information from the computer, characterised in that the software forms part of an agent obtained from an Internet source.

## Description

### Description of and Background to the Invention

This invention relates to a method of obtaining configuration information from a computer and to a computer program comprising program instructions for gathering hardware and/or software configuration information from the computer on which it is executed.

In particular, although by no means exclusively, the invention relates, in broad terms, to a method of obtaining hardware and software configuration information from a computer so that, for example, an IT administrator may keep track of the make, date of manufacture, release version, and serial ID number of the computer's hardware components, in addition to monitoring the range of software applications with which the computer is provided.

As will be appreciated, configuration information of this type is useful not only from an IT "bookkeeping" point of view, but can also be useful during fault diagnosis and user support, as it enables old and potentially faulty hardware/software components to be identified.

The invention also relates, in broad terms, to an improved computer program which enables configuration information of this type to be obtained.

Configuration management systems and applications are known, by which configuration information relating to an organisation's computer systems networks can be obtained, with the two most common systems being the Desktop Management Interface (DMI) solution of the Desktop Management Task Force (DMTF) and Microsoft's Window's (RTM) Management Instrumentation (WMI) model.

Systems such as these go some way to providing network administrators, for example, with relatively easy access to hardware/software configuration information, but implementation of both the systems requires the installation and continual management of appropriate hardware and software packages. In particular, the DMI approach requires the presence of a Management Information Format (MIF) database which contains configuration information obtained from the various hardware and software components. The DMI approach also requires a DMI-compliant management software package and, more importantly, a DMI-compliant computer. This latter requirement means that the DMI approach cannot operate satisfactorily where some of the hardware/software components are not provided with DMI-compliant drivers.

Moreover, the DMI approach, in view of its cost and relative complexity, is inherently unsuitable for single user (e.g. domestic) requirements.

It is thus an object of the present invention to provide a method of obtaining configuration information from a computer which overcomes or at least alleviates these and other drawbacks. It is also an object of the present invention to provide an improved computer program which enables configuration information of this type to be obtained.

### Summary of the Invention

In accordance with a first aspect of the present invention, there is provided a method of obtaining configuration information from a computer, comprising procuring information-gathering software and using the software to gather configuration information from the computer, characterised in that the software forms part of an agent obtained from an Internet source.

Preferably, the information-gathering software is used in response to an indication of trust being provided by a user of the computer.

The agent may be obtained from the Internet source using an object-oriented component such as an applet or ActiveX control.

The component may be used to obtain the software in response to an indication of trust being provided by a user of the computer.

To this end, the component may provide the user with a trust request, compliance with the request causing the component to obtain the agent from the Internet source.

Thus, where the agent is obtained from the Internet source using an applet, the applet may be effective to provide the user with a trust request "pop-up" box, selection of a "YES" option causing the applet to obtain the information-gathering agent from the Internet source.

Similarly, the information-gathering software may be caused to run in the computer upon dispatch of this or an additional "YES" response. As will be appreciated by those well versed in the relevant art, dispatch of the "YES" response may be effective to allow the applet to operate outside its sandbox.

Preferably, the agent is obtained from the Internet source in response to substantially a single action being performed by the user.

As will be appreciated, this substantially single action may be the despatch of the "YES" trust response, conveniently effected by a single mouse click.

The agent may similarly be used in response to substantially a single action being performed by the user.

The configuration, once gathered, may be output in an XML format.

Preferably the agent has a software footprint of a size that enables it to be downloaded, on demand, from an Internet source, in a user-acceptable timeframe.

To this end, the footprint preferably is less than about 330 Kbytes.

Conveniently, the footprint is about 221 Kbytes.

As will be appreciated, this relatively small footprint size enables the agent to be downloaded from an Internet source fairly quickly, in stark contrast to conventional configuration information-gathering software which has a far bigger software footprint (typically about 3 to 7 Mbytes), making it unsuitable for downloading from an Internet source.

The configuration information gathered may include at least one of BIOS data, device driver data, Operating System and installed application data.

Preferably, the configuration information is passed to a recipient as part of an e-mail communication.

The e-mail communication may be generated and/or sent by the object-oriented component.

In this way, an automated information gathering method is provided, in that the information gathering, and the e-mail generation/sending, is performed by the object-oriented component. From the user's perspective, this offers clear benefits, in that a minimal amount of user input is required.

In accordance with a second aspect of the present invention, there is provided a method of obtaining configuration information from a computer, comprising procuring information-gathering software and using the software to gather configuration information from the computer, characterised in that the software is obtained from an Internet source in response to substantially a single action being performed by a user.

The configuration information may be passed to a recipient as part of an e-mail communication, the communication being generated and/or sent in response to said single action.

The invention, in its second aspect, may comprise one or more of the features of the first aspect of the present invention.

In accordance with a third aspect of the present invention, there is provided a computer program comprising program instructions for gathering hardware and/or software configuration information from the computer on which it is executed, characterised in that the program has a footprint of less than about 330 Kbytes.

Preferably, the program has a footprint of about 221 Kbytes.

### Brief Description of the Drawings

The invention will now be described in greater detail, but strictly by way of example only, by reference to the accompanying drawings, of which:
Figure 1 is a schematic illustration showing how the invention, in its first and second aspects, may be put into practice; and
Figure 2 is a flow diagram illustrating the various steps performed as the invention is put into practice.

### Best Mode of the Invention

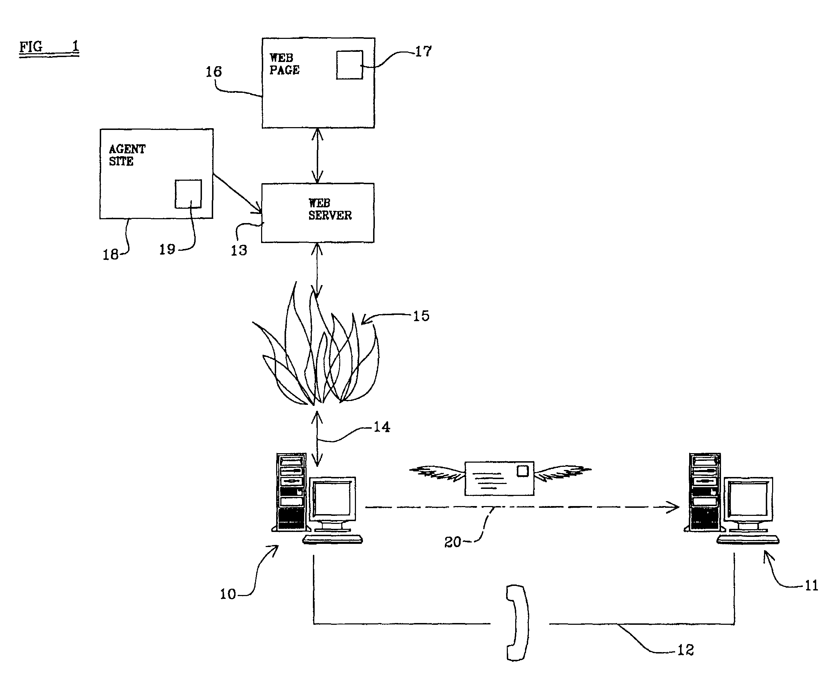

Referring first to Figure 1, this shows, in schematic form, a PC 10 from which it is desired to obtain hardware/software configuration information. In the event of a malfunction, or, for example, where advice is required in relation to a hardware/software upgrade, a user of the PC 10 may contact a customer call centre indicated generally at 11 using a conventional telephone link 12. In order for support personnel at the customer call centre 11 to be able to advise as to appropriate action, information concerning the hardware and software configuration of the user's PC 10 is required. In order to effect this, the user of the PC 10 is asked to connect to a specific Website via Web Server 13, with the HTTP request 14 being able to pass unhindered through any filewall 15 or other such security device.

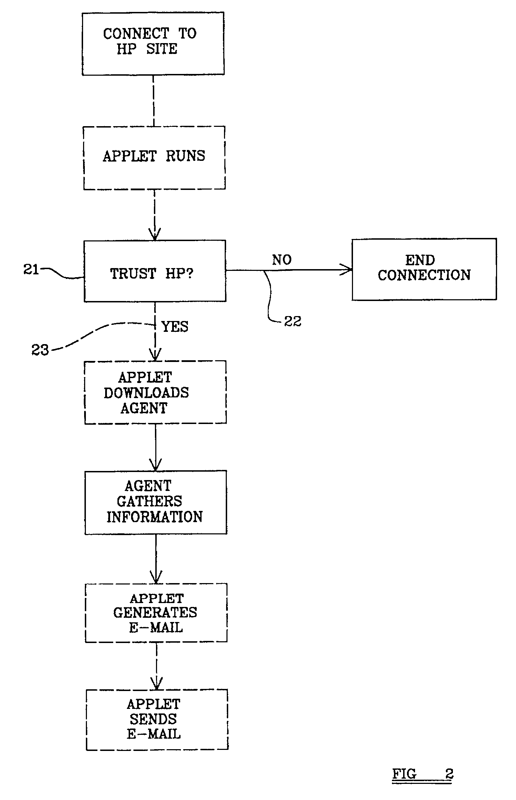

Once a connection is established between the PC 10 and the Web Server 13, the requested web page 16 is served, by the web server 13, to a Web browser (not shown) provided on the PC 10. The web page 16 is provided with an embedded Java applet indicated schematically at 17, the applet being caused to run, in conventional manner, within the browser application of the PC 10. The applet generates a trust request (see Figure 2), seeking confirmation from the user that information-gathering software may be downloaded to the user's PC 10, for the purpose of gathering the required hardware/software configuration information. The trust request, which conveniently may take the form of a "pop-up" dialogue box, can be complied with by the user with just a single mouse click, meaning that the user is not required to undertake any complex tasks. Upon dispatch of an appropriate "YES" response from the PC's browser, an information-gathering agent is downloaded to the PC 10 from an Internet site such as that indicated generally at 18. It will be appreciated that the initially accessed web page 16 may be provided on the same site as the information-gathering agent, although this is not necessarily the case.

Generation and despatch of the "YES" response by the user's browser is also effective to allow the agent (indicated schematically at 19) to perform a data harvesting operation within the PC 10. From this, it will be understood that issuance of the "YES" response has two principal effects: allowing the Java applet 17 to operate outside its browser sandbox, and thus allowing it to download the agent 19 and also allowing the agent 19 to perform its information-gathering task. As all of this is effected, from the user's point of view, by a single operation (mouse click), the information-gathering process of the present invention is extremely user-friendly. From a technical standpoint, the invention also offers many advantages, principally in that conventionally-required DMI/WMI network infrastructures are obviated.

Once the agent 19 has concluded the information-gathering step, the applet 17 is effective automatically to convert the gathered information into a convenient format such as XML, and to despatch the information to the customer call centre 11 as part of an e-mail communication 20. As an alternative, the information could be gathered directly in XML format. Generation and despatch of the e-mail communication 20 is also effected as a result of the single user operation (mouse click), meaning that the information-gathering process, from start to finish, is effected in a manner which is very simple for the user to perform.

It is however envisaged that the latter step (generation and despatch of the e-mail communication) may not be necessary in all cases, with it being contemplated that the harvested data could also be sent (for example) to the customer call centre using HTTP, FTP, or simply by printing a summary of the configuration information, and transmitting this to the call centre 11 by facsimile. Similarly, it is envisaged that only part of the e-mail generation may be automated by the applet: to this end, the "body" of the message may be composed under the authority of the applet, with it being left to the user to complete the recipient's e-mail address details.

Figure 2 illustrates, in a flow diagram manner, the various operational steps which are performed as the invention is put into practice.

As explained in relation to Figure 1, the first task, from the user's point of view, is to establish a connection between the user's PC 10 and an appropriate (e.g. Hewlett Packard) support Website. Establishment of this connection between the user's browser and the Website concerned launches an embedded Java applet which is then caused to run within the user's browser application. Execution of the applet causes a "pop-up" trust request box 21 to be generated by the user's browser, offering the user a simple YES/NO choice as to whether or not authority is to be given to the applet to continue with the data-gathering process. If a "NO" response 22 is despatched by the user, the browser/Website connection is terminated. On the other hand, if a "YES" response 23 is generated, the applet downloads an appropriate information-gathering agent from a specified Internet source, and causes the agent to execute within the environment of the user's PC 10. Once the configuration information has been gathered in this way, the applet, in conjunction with an e-mail generation facility provided on the PC 10, generates an e-mail communication having, in its body, the information gathered from the PC 10. Subsequently, this e-mail communication is sent to a known destination (such as the customer call centre 11) for analysis by appropriate support personnel.

From the foregoing, it can be seen that the invention, in its various aspects, provides numerous advantages. First of all, the way in which the information-gathering process is effected is extremely simple: a single operation on the part of the user is all that is required
a) to download an information gathering agent
b) to run the information gathering software and
c) to communicate the information thus gathered to support personnel.

Moreover, the relatively small footprint (about 221 Kbytes) of the agent 19 facilitates downloading of the agent 19 from the Internet, in a relatively short timescale which will be acceptable to the user.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of obtaining configuration information from a computer, comprising procuring information-gathering software and using the software to gather configuration information from the computer, **characterised in that** the software forms part of an agent obtained from an Internet source.

2. A method according to Claim 1 wherein the software is used in response to an indication of trust being provided by a user of the computer.

3. A method according to Claim 1 or Claim 2 wherein the agent is obtained from the Internet source using an object-oriented component such as an applet or an ActiveX control.

4. A method according to Claim 3 wherein the component is used to obtain the software in response to an indication of trust being provided by a user of the computer.

5. A method according to Claim 3 or Claim 4 wherein the component provides the user with a trust request, compliance with the request causing the component to obtain the agent from the Internet source.

6. A method according to any one of the preceding claims wherein the agent is obtained from the Internet source in response to substantially a single action being performed by the user.

7. A method according to any one of the preceding claims wherein the agent is used in response to substantially a single action being performed by the user.

8. A method according to any one of the preceding claims wherein the configuration information, once gathered, is output in an XML format.

9. A method according to any one of the preceding claims wherein the agent has a software footprint of a size that enables it to be downloaded, on demand, from an Internet source in a user-acceptable timeframe.

10. A method according to Claim 9 wherein the footprint is less than about 330 Kbytes.

11. A method according to Claim 9 or Claim 10 wherein the footprint is about 221 Kbytes.

12. A method according to any one of the preceding claims wherein the configuration information gathered includes at least one of BIOS data, device driver data, Operating System and installed application data.

13. A method according to any one of the preceding claims wherein the configuration information is passed to a recipient as part of an e-mail communication.

14. A method according to Claim 13 wherein the e-mail communication is generated and/or sent by the object-oriented component.

15. A method of obtaining configuration information from a computer, comprising procuring information-gathering software and using the software to gather configuration information from the computer, **characterised in that** the software is obtained from an Internet source in response to substantially a single action being performed by a user.

16. A method according to Claim 15 wherein the configuration information is passed to a recipient as part of an e-mail communication, the communication being generated and/or sent in response to said single action.

17. A computer program comprising program instructions for gathering hardware and/or software configuration information from the computer on which it is executed, **characterised in that** the program has a footprint of less than about 330 Kbytes.

18. A computer program according to Claim 17 wherein the footprint is about 221 K bytes.
